Europäisches Patentamt

European Patent Office

Office européen des brevets

(19)

(11)   **EP 1 607 740 A1**

(12)   **EUROPEAN PATENT APPLICATION**
published in accordance with Art. 158(3) EPC

(43) Date of publication:
   **21.12.2005  Bulletin 2005/51**

(51) Int Cl.⁷: **G01N 30/88**, G01N 30/86

(21) Application number: **04708887.7**

(86) International application number:
   **PCT/JP2004/001260**

(22) Date of filing: **06.02.2004**

(87) International publication number:
   **WO 2004/070379 (19.08.2004 Gazette 2004/34)**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority:  **07.02.2003  JP  2003031563**

(71) Applicants:
   • **Usui, Shinichi**
     **Okayama-shi Okoyama 7000065 (JP)**
   • **Okazaki, Mitsuyo**
     **Chikawa-shi Chiba 2720034 (JP)**
   • **Kakuuchi, Hajime**
     **Torrance, CA 90501 (US)**

(72) Inventors:
   • **Usui, Shinichi**
     **Okayama-shi Okoyama 7000065 (JP)**
   • **Okazaki, Mitsuyo**
     **Chikawa-shi Chiba 2720034 (JP)**
   • **Kakuuchi, Hajime**
     **Torrance, CA 90501 (US)**

(74) Representative:
   **Denison, Christopher Marcus et al
   Mewburn Ellis LLP
   York House
   23 Kingsway
   London WC2B 6HP (GB)**

(54)   **METHOD OF LIPOPROTEIN ANALYSIS AND ANALYTICAL PROGRAM**

(57)   On a chromatogram wherein peaks corresponding to a plurality of classes of lipoproteins appear in a mixed form, components contained in the lipoproteins are quantitatively determined by class. The present invention comprises a first step of separating a plurality of classes of lipoproteins contained in a sample through liquid chromatography and assaying the components contained in the separated lipoproteins and a second step of dividing the chromatogram obtained in the above described first step by lipoprotein class and determining quantitatively the components contained in the lipoproteins by class.

Fig. 1

## Description

Technical Field

The present invention relates to a method for analyzing lipoprotein such as very low density lipoprotein and low density lipoprotein contained in a sample by employing liquid chromatography, and to an analytical program as well as an analyzer therefore.

Background Art

Lipoprotein in the blood is a complex between lipid and protein formed by the association of lipid such as cholesterol, neutral fat (triglyceride), and phospholipid with apolipoprotein, and is classified into some classes depending on the types of apolipoprotein, the lipid content and the like. Since lipoprotein in the blood is not homogeneous but has various functions depending on the type of lipoprotein, it is important for the elucidation of a correlation between diseases such as coronary artery disease, hepatic failure, or diabetes and abnormal lipid metabolism, when analyzing serum lipoprotein, not only to measure total lipoprotein in the blood but also to separate the lipoprotein into some classes and carry out the quantitative determination of the separated lipoprotein contained in each class.

Examples of conventional methods for lipoprotein analysis include: ultracentrifugation in which the separation is performed by utilizing a difference in specific gravity between lipoproteins; electrophoresis in which the separation is performed by utilizing a difference in surface charge between lipoproteins; a bonding-precipitation method which utilizes stability of a colloid or a certain property that heparin and $CaCl_2$ or dextran sulfate form a precipitate being insoluble in a certain lipoprotein; liquid chromatography in which the separation is performed by utilizing a difference in molecule size between lipoproteins; and the like.

On the other hand, the present inventors have developed in their prior application a method for obtaining a lipoprotein profile specific for cholesterol or triglyceride by treating lipoprotein separated through high performance liquid chromatography with an enzyme reagent (see Patent Document 1). According to this method, it is possible to promptly conduct, for example, an analysis of lipoprotein contained in a blood sample as well as quantifications of cholesterol and triglyceride with a certain degree of precision.

Patent Document 1

JP Patent Publication (Kokai) No. 8-320313A (1996)

However, the method disclosed in Patent Document 1 has a problem that, if a plurality of classes of lipoproteins belonging to different categories develop the same peaks (hereinafter, referred to as "a mixed peak"), it becomes difficult to explicitly analyze cholesterol and triglyceride contained in the plurality of classes of lipoproteins by class.

Therefore, in view of the above described circumstances, an object of the present invention is to provide a method of serum lipoprotein analysis and an analytical program therefor, in which components contained in lipoprotein can be quantified by class with respect to a chromatogram which exhibits a mixed form of peaks corresponding to a plurality of classes of lipoproteins.

Disclosure of the Invention

The present invention achieving the above described object encompasses:

(1) a method of lipoprotein analysis comprising a first step of separating a plurality of classes of lipoproteins contained in a sample through liquid chromatography and assaying components contained in the separated lipoprotein, and a second step of dividing a chromatogram obtained as a result of the first step into each lipoprotein class and determining quantitatively the components contained in each class of lipoprotein;

(2) the method of lipoprotein analysis according to (1), wherein, when a chromatogram having a mixed peak corresponding to two or more classes is obtained as a result of the first step, the mixed peak is divided among respective classes based on previous quantification of the components included in at least one class among the plurality of classes;

(3) the method of lipoprotein analysis according to (2), wherein, the plurality of classes corresponding to the mixed peak are a very low density lipoprotein class and a low density lipoprotein class, and in the second step the mixed peak corresponding to the very low density lipoprotein class and the low density lipoprotein class are divided among the very low density lipoprotein class and the low density lipoprotein class based on previous quantification of the components included in the low density lipoprotein class;

(4) the method of lipoprotein analysis according to (1), wherein, when a chromatogram without peaks corresponding to the classes is obtained as a result of the first step, an elution time is determined from a mean particle size with respect to a class of interest based on a calibration curve which represents a relationship between an elution time and a mean particle size of a standard sample, and a region defined by the determined elution times is considered to be a region corresponding to the class of interest, and the components contained in lipoprotein included the class of interest are subjected to the quantitative determination;

(5) the method of lipoprotein analysis according to (4), wherein, the plurality of classes are at least two or more classes selected from a group consisting of a chylomicron class, a very low density lipoprotein class, a low density lipoprotein class, and a high density lipoprotein class;

(6) the method of lipoprotein analysis according to any one of (1) to (5), wherein, in the first step, an eluate from the liquid chromatography is distributed into a plurality of channels, and different component analyses are performed on the different channels respectively to obtain multiple chromatograms based on the results of respective component analyses;

(7) the method of lipoprotein analysis according to any one of (1) to (5), wherein, in the first step, an eluate from the liquid chromatography is distributed into a first channel for assaying cholesterol and a second channel for assaying triglyceride to obtain a chromatogram with respect to cholesterol and a chromatogram with respect to triglyceride in the first channel and the second channel respectively;

(8) the method of lipoprotein analysis according to any one of (1) to (5), wherein a noise(s) positioned before the elution time of chylomicron and peaks caused by hemolysis are eliminated from the chromatogram;

(9) the method of lipoprotein analysis according to any one of (1) to (5), wherein, when triglyceride is assayed as a component contained in the lipoprotein, a peak corresponding to free glycerol is eliminated from the obtained chromatogram;

(10) an analytical program for lipoprotein comprising a first step of separating a plurality of classes of lipoproteins contained in a sample through liquid chromatography and then dividing a mixed peak comprising two or more classes with a plurality of peaks mixed, based on a chromatogram obtained by assaying components contained in the separated lipoproteins, and a second step of determining quantity of the components contained lipoprotein in each class of lipoprotein;

(11) the analytical program for lipoprotein according to (10), wherein, when the mixed peak corresponding to two classes is divided in the first step, an area representing a half of the mixed peak along its width direction calculated by using a height and a half-width of the mixed peak is multiplied by a value calculated based on a chromatogram obtained by individually quantifying components contained in one class of lipoprotein in order to calculate a corrected area representing a half of the mixed peak along its width direction, and then the components contained in lipoprotein are quantified by class with the use of a peak half area obtained by dividing the mixed peak by a line which passes through a top of the mixed peak and is perpendicular to its width direction and with the use of the corrected area;

(12) the analytical program for lipoprotein according to (10) further comprising a third step of determine quantity of components contained in the predetermined class of lipoprotein by lipoprotein class on the basis of an elution time of the predetermined class with respect to the chromatogram, when a peak corresponding to a predetermined class is not detected on the chromatogram, ;

(13) the analytical program for lipoprotein according to (12), wherein the elution time of the lipoprotein is defined on the basis of a calibration curve which is generated by using a standard sample and which represents a relationship between a mean particle size and an elution time of lipoprotein;

(14) the analytical program for lipoprotein according to (10), wherein the components contained in the above described lipoprotein are triglyceride and cholesterol;

(15) an analyzer for lipoprotein comprising an analytical program, which comprises a first step of separating a plurality of classes of lipoproteins contained in a sample through liquid chromatography and then dividing a mixed peak comprising two or more classes with a plurality of peaks mixed, based on a chromatogram obtained by assaying components contained in the separated lipoproteins, and a second step of determining quantity of the components contained lipoprotein by lipoprotein class;

(16) the analyzer for lipoprotein according to (16) further comprising a column(s) having a resolution which depends on a particle size, a detection part (a) for detecting a lipoprotein component present in an eluate from the column, a processing part for performing operations on output signals from the detection part, and a control part for controlling the operations at the processing part in accordance with the analytical program; and

(17) the analyzer for lipoprotein according to (15) further comprising a distribution part for distributing the eluate from the column into a plurality of channels, wherein the detection part is positioned on each of the channels distributed by the distribution part to detect different components in the different channels respectively, and the quantitative determination of the plurality of components contained in lipoprotein is performed by class in accordance with the above described analytical program.

The present specification encompasses the contents of JP Patent Application 2003-031563 and/or drawings thereof, based on which the present application claims a priority.

Brief Description of the Drawings

Figure 1 shows a system configuration of a lipoprotein analyzer which conducts the quantitative determination of TC and TG contained in serum lipoprotein;

Figure 2(A) is a chromatogram obtained by using "TSKgel LipopropakXL" (trade name) produced by Tosoh Corp., and Figure 2(B) is a chromatogram obtained by using "Superose 6HR" (trade name) produced by Pharmacia Co.;

Figures 3(a), (c), and (e) are chromatograms of samples #01, #02, and #03 respectively, and Figures 3(b), (d), and (f) are chromatograms enlarged to show TG on chromatograms of Figures (a), (c), and (e) respectively;

Figure 4A is a characteristic diagram showing a correlation between an analytical result on a TSKgel LipopropakXL column and an analytical result on a Superose 6HR column;

Figure 4B is a characteristic diagram showing a correlation between an analytical result on a TSKgel LipopropakXL column and an analytical result on a Superose 6HR column; and

Figure 5 is a characteristic diagram showing a result of the quantitative determination of TG by means of an enzymatic method without performing operations of removing free glycerol, and a corrected value obtained by subtracting a free glycerol content determined by the present analytical program from the above described result.

Description of Symbols

1 ... column, 2 ... splitter, 3 ... first channel, 4 ... second channel, 9 ... system controller, 10 ... arithmetic unit

Best Mode for Carrying Out the Invention

A method for analyzing lipoprotein and an analytical program therefor according to the present invention will now be described in detail with reference to drawings.

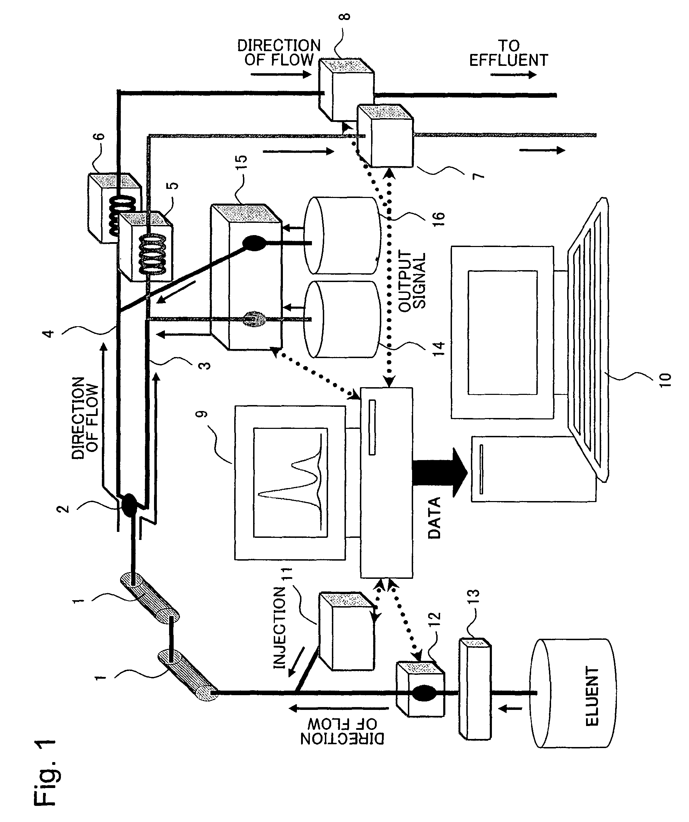

An analyzer for lipoprotein to which an analytical method and a program therefore according to the present invention is applied comprises, for example, a column 1 for separating a lipoprotein component contained in a serum sample, a splitter 2 for distributing an eluate containing lipoprotein eluted from the column 1 into two ways, a first channel 3 and a second channel 4 distributed by the splitter 2, a cholesterol (hereinafter, referred to as "TC") reaction part 5 positioned on the first channel 3, a triglyceride (hereinafter, referred to as "TG") reaction part 6 positioned on the second channel 4, a TC detection part 7 positioned downstream of the TC reaction part 5 on the first channel 3, a TG detection part 8 positioned downstream of the TG reaction part 6 on the second channel 4, a system controller 9 to which signals are input from the operational control of this apparatus as well as the TC detection part 7 and the TG reaction part 8, and an arithmetic unit 10 connected to the system controller 9 as shown in Figure 1.

The lipoprotein analyzer also comprises a sampler 11 for supplying the serum sample to the column 1, a first pump 12 for supplying an eluent to the column 1, and a degasser 13 for removing gases from the eluent which is to be supplied to the column 1 by the first pump 12.

Although the column 1 in the lipoprotein analyzer is not particularly limited to a certain column, it is particularly preferable to use a column filled with a filler for gel filtration. In particular, examples of the column 1 include a column filled with a filler having a mean pore size of 800 to 1200 angstroms. If the filler has a mean pore size of less than 800 angstroms, then lipoprotein having a large molecule size such as CM or VLDL can not easily penetrate into the pore, and on the other hand, the filler having a mean pore size of greater than 1200 angstroms may impair the separation of lipoprotein having a small molecule size such as LDL or HDL, so that it is preferable to use a filler having a mean pore size of 800 to 1200 angstroms as described above. Among others, a filler having a mean pore size of 900 to 1100 angstroms, which is excellent in its resolution, eventually allows an analysis of lipoprotein with a higher degree of precision.

In addition, it is necessary to select a filler having a mechanical strength enough to endure the use in liquid chromatography. Examples of such filler include, for example, a material based on silica gel, polyvinyl alcohol, polyhydroxymethacrylate, and other hydrophilic resins (for example, TSKgel Lipopropak (trade name), produced by Tosoh Corp.).

Examples of the eluent include a phosphate buffer solution, a Tris buffer, a Bis-Tris buffer and the like, but the eluent is not limited to such examples as long as lipoprotein can be separated. A concentration of the buffer is preferably within a range of 20 to 200 mM, and particularly preferably within a range of 50 to 100 mM This is because the buffer concentration less than 20 mM provides a lower buffer capacity and the buffer concentration greater than 200 mM may have a possibility that a reaction between an enzyme reagent described below and TC or TG is inhibited. A pH value of the buffer solution is 5 to 9, and is particularly preferably 7 to 8. This is because the pH of the buffer solution less than 5 or greater than 9 may result in a possibility that a reaction with the enzyme reaction is inhibited as described above. However, the above described conditions are not essential if the measurement of TC and/or TG is performed without using the enzymes.

The TC reaction part 5 is connected via the second pump 15 to a TC reagent tank 14 having a regent to determine the quantity of TC contained in the eluate containing lipoprotein eluted from the column 1. Examples of the reagent which can be used herein for determining quantity of TC include, but not particularly limited to, an enzyme-dye reagent which is a combination of an enzyme such as cholesterol esterase, cholesterol oxidase, or peroxidase and a dye such as N-ethyl-N-(3-methylphenyl)-N'-succinylethylenediamine, 4-aminoantipyrine, or N-ethyl-N-(3-sulfopropyl)-m-anisidine, for example. For example, commercially available reagents such as Determiner L TCII (Kyowa Medex Co., Ltd.) and L type CHO·H (Wako Pure Chemical Industries. Ltd.) can be preferably used as the above described reagent. These reagents, after reacting with TC, produce reaction products generating or absorbing fluorescence which can be detected by a spectroscope such as a fluorescence detector or an ultraviolet-visible light detector.

The TG reaction part 6 is connected via the second pump 15 to a TC reagent tank 16 having a regent to determine the quantity of TG contained in the eluate containing lipoprotein eluted from the column 1. Examples of the reagent which can be used herein for determining quantitatively TG include, but not particularly limited to, an enzyme-dye reagent which is a combination of an enzyme such as ascorbate oxidase, glycerol kinase, glycerol-3-phosphate oxydase, lipoprotein lipase and peroxidase with a dye such as a quinine based chromophoric dye. Examples of the quinine-based chromophoric dye include an oxidation-condensate of N-ethyl-N-(3-methylphenyl)-N'-succinylethylenediamine or N-ethyl-N-(3-sulfopropyl)-m-anisidine and 4-antiaminopyrine. For example, commercially available reagents such as Determiner L TGII (Kyowa Medex Co., Ltd.) and L type TGH (Wako Pure Chemical Industries. Ltd.) can be preferably used as the above described reagent.

In addition, the TC reaction part 5 and the TG reaction part 6 comprises reaction coils respectively for controlling a temperature at the time of reaction between the above described reagent and TC or TG. At the TC reaction part 5 and the TG reaction part 6, a temperature at a time of reaction between the above described reagent and TC or TG is set at 35 to 50°C, and preferably at 45 to 50°C. This is because the reaction temperature less than 35°C tends to provide an insufficient reaction, and the reaction temperature greater than 50°C may have a possibility that the enzyme deteriorates during the reaction.

The TC detection part 7 comprises an ultraviolet-visible light detector, for example, for detection of absorption of light from a reaction product produced by the reaction of TC with the reagent in the TC reaction part 5. In addition, the TG detector 8 comprises an ultraviolet-visible light detector, for example, for detection of absorption of light from a reaction product produced by the reaction of TG with the reagent in the TG reaction part 6. For example, when a quinone based chromophoric dye is used as the above described reagent, a measurement wavelength of the ultraviolet-visible light detector may be set at 540 to 560 nm.

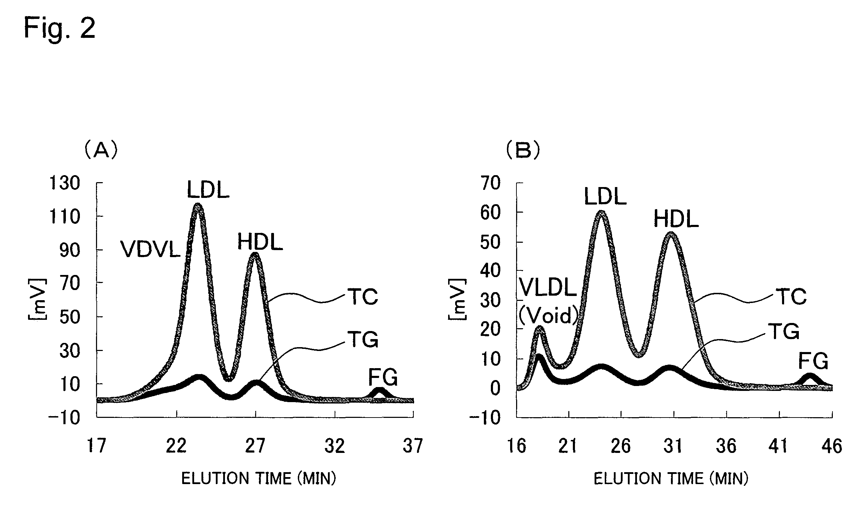

The system controller 9, into which output signals from the TC detection part 7 and the TG detection part 8 are input, has a function of outputting a chromatogram of TC and a chromatogram of TG as results based on the signals. As for the chromatogram being output from the system controller 9 in which a horizontal axis indicates an elution time (min.) and a vertical axis indicates a detection value (mV), a chromatogram of TC can be superimposed on a chromatogram of TG as shown in Figure 2A for example.

As for the arithmetic unit 10, it is possible to use a computer installed with an analytical program described below, for example. The arithmetic unit 10 is connected to the system controller 9, and has functions of performing data processing with respect to the chromatogram being output from the system controller 9 in accordance with the analytical program and of calculating a TC content and a TG content contained in the serum sample by lipoprotein class. The arithmetic unit 10 may be connected to the system controller 9 via an information communication circuit network such as the Internet, LAN, or an intranet.

According to the above described lipoprotein analyzer, various types of lipoproteins are firstly separated by the column 1 depending on their particle size, and then subjected to the quantitative determination of TC and TG contained in eluates eluted from the column 1. Therefore, the lipoprotein analyzer allows for the quantitative determination of TC and TG by lipoprotein class, depending on the resolution of the column 1. Lipoproteins are classified into some classes based on their differences in particle size, hydration density, electrophoretic mobility and the like, and basically, lipoproteins are classified into CM (chylomicron), VLDL (very low density lipoprotein: d<1.006 kg/L), LDL (low density lipoprotein: 1.006 kg/L<d<1.063 kg/L), and HDL (high density lipoprotein: 1.063 kg/L<d<1.210 kg/L) in increasing order of weight, in accordance with the hydration density defined by a ratio of protein to lipid contained in the particle.

However, the lipoprotein analyzer may output a chromatogram which exhibits a mixed peak comprising multiple peaks corresponding to a plurality of classes in a mixed form , depending on the resolution of the column 1. For example, when "TSKgel LipopropakXL" (trade name) produced by Tosoh Corp. is used, a chromatogram as shown in Figure 2A is output. In the chromatogram shown in Figure 2A, a peak corresponding to VLDL is superimposed on a peak corresponding to LDL. In this case, it is impossible to directly determining quantity of TC and TG contained in VLDL and of TC and TG contained in LDL from Figure 2A.

Thus, the lipoprotein analyzer determines quantity of TC and TG contained in VLDL and of TC and TG contained in LDL by conducting data processing with respect to the chromatogram being output from the system controller 9, in accordance with the analytical program.

Now, the analytical program will be described. The following is a case of presenting a mixed peak of a peak corresponding to VLDL and a peak corresponding to LDL as shown in the chromatogram of Figure 2A.

Firstly, the analytical program calculates a reference area (Gauss) from the equation described below, based on the output from the system controller 9. At first, an elution time [min] of a mixed peak on a chromatogram with respect to TC is referred to as tcT, an elution time [min] of a mixed peak on a chromatogram with respect to TG is referred to as tgT, an elution time [min] of a peak which corresponds to LDL assayed on a chromatogram when using a standard sample (always existing) is referred to as StdT, and any one of the tcT, tgT, and StdT detected at the rightmost thereof (the latest elution time) is referred to as T[min]. Then, on each of the chromatogram with respect to TC and the chromatogram with respect TG, a height detected at a time of T[min] is referred to as H[mV].

In addition, a half-width [sec] of the mixed peak on the chromatogram for TC is referred to as tcW, a half-width [sec] of the mixed peak on the chromatogram for TG is referred to as tgW, a half-wigth [sec] of the peak which corresponds to LDL assayed on the chromatogram when using the standard sample is referred to as StdW, and any one of the tcW, tgW, and StdW which is the smallest thereamong (the narrowest half-width) is referred to as W[sec].

Using the thus determined H and W, a reference area Gauss [mV*sec] is determined.

$$\text{Gauss [mV*sec]} = H \times W/2 \times \sqrt{(2\pi)} \times \text{Cons.}$$

In the above described equation, Cons. is a constant to be multiplied in order for obtaining a better result of correlation. The Cons. can also be determined for each of the TC quantification and the TG quantification. However, the manner of Cons. determination is not limited to the following method. Although a procedure for determining Cons. used for the TC quantification will be described below, the same is true for the Cons. which is used for the TG determination.

First, employing liquid chromatography which uses a column such that a peak corresponding to VLDL and a peak corresponding to LDL are independently obtained as a single peak (for example, Superose column series produced by Pharmacia Corp.), chromatograms of TC and TG with respect to specimens from normal healthy persons (n=66) are obtained. Based on the obtained respective chromatograms, a TC concentration in VLDL (VLDL-C-Sup), a TG concentration in VLDL (VLDL-TG-Sup), a TC concentration in LDL (LDL-C-Sup), and a TG concentration in LDL (LDL-TG-Sup) are calculated.

It has been known that, in the case of specimens from normal healthy persons other than that obtained after eating, the samples include little CM. When using the Superose column series produced by Pharmacia Corp., CM and VLDL are detected as void peaks while a peak with respect to LDL becomes a single peak.

Figure 2B shows a chromatogram obtained when using "Superose 6HR" (trade name) as the Superose column series produced by Pharmacia.

Next, employing liquid chromatography which uses a column such that a peak corresponding to VLDL and a peak corresponding LDL are detected as a mixed peak, chromatograms of TC and TG with respect to the same specimens from normal healthy persons (n=66) are obtained. Based on the obtained respective chromatograms, an area of the mixed peak is divided, and a TC concentration in VLDL (VLDL-C-TSK), a TG concentration in VLDL (VLDL-TG-TSK), a TC concentration in LDL (LDL-C-TSK), and a TG concentration in LDL (LDL-TG-TSK) are calculated.

Subsequently, an optimum value is determined from the calculated VLDL-C-Sup, VLDL-TG-Sup, LDL-C-Sup, LDL-TG-Sup, VLDL-C-TSK, VLDL-TG-TSK, LDL-C-TSK, and LDL-TG-TSK. The optimum value is determined in consideration not only of a correlation between concentrations of the same object such as a correlation between VLDL-C-Sup and VLDL-C-TDK, but also of a correlation of ratios between fractions such as a correlation between a value of VLDL-C-Sup/LDL-C-Sup and a value of VLDL-C-TSK/LDL-C-TSK and a correlation between lipid ratios within fractions such as a correlation between a value of LDL-C-Sup/LDL-TG-Sup and a value of LDL-C-TSK/LDL-TG-TDK, for example.

When the optimum value was determined, an approximate straight line was produced by applying a least squares method between a result obtained from a column in which a peak corresponding to VLDL and a peak corresponding to LDL are separately obtained as a single peak and a result obtained from a column in which a mixed peak is obtained. Then, a value at which a correlation coefficient r of the approximate straight line becomes optimum is referred to as Cons. which is used for the TC quantitative determination in the above described equation.

Next, the analytical program uses the reference area Gauss and divides an area of the mixed peak into an area of LDL and an area of VLDL by the following calculation.

$$\text{LDL area} = \text{LDLr} + \text{Gauss}$$

$$\text{VLDL area} = \text{LDLl} - \text{Gauss}$$

In the above equations, LDLr is an area positioned on the right side of T[min] within an area of the mixed peak, and LDL1 is an area positioned on the left side of T[min] within an area of the mixed peak. The analytical program of the present invention performs calculations of areas of VLDL and LDL as described above, and then calculates a TC content and an TG content in VLDL as well as a TC content and a TG content in LDL.

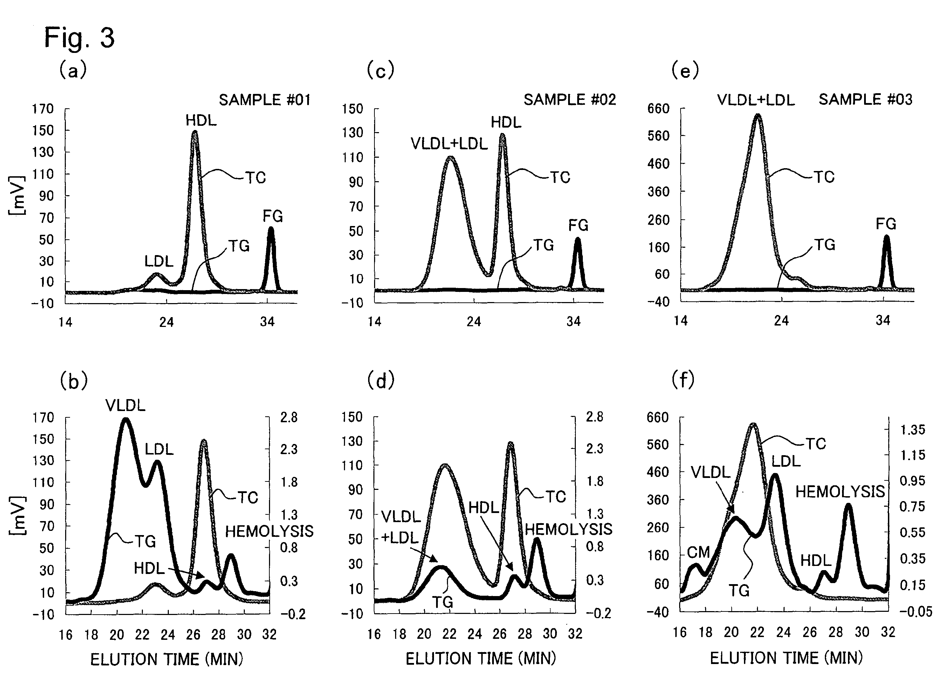

Using the above described analytical program, the quantitative determinations of TC and TG contained in respective lipoproteins are performed with respect to three chromatograms specifically shown in Figure 3. In addition, as for lipoprotein obtained as a single peak in Figure 3, the peak was identified by the so-called division-at-valley method.

In Figure 3, (a) is for a sample #01 (a sample taken from a wild type mouse), (b) is an enlarged chromatogram showing TG of (a), (c) is for a sample #02 (a sample taken from a transgenic mouse), (d) is an enlarged chromatogram showing TG of (c), (e) is for a sample #03 (a serum sample taken from the transgenic mouse), and (f) is an enlarged chromatogram showing TG of (e). Figure 3 shows chromatograms obtained by using "TSKgel LipopropakXL" (trade name) produced by Tosoh Corp.

The result is shown in Table 1.

Table 1

| Sample # | TC [mg/dL] | CM-C [mg/dL] | VLDL-C [mg/dL] | LDL-C [mg/dL] | HDL-C [mg/dL] | TG [mg/dL] | CM-TG [mg/dL] | VLDL-TG [mg/dL] | LOL-TG [mg/dL] | HDL-TG [mg/dL] | FG [mg/dL] |
|---|---|---|---|---|---|---|---|---|---|---|---|
| 01 | 91.4 | 0.0 | 4.1 | 9,7 | 77.6 | 21.0 | 0.0 | 13.2 | 7.1 | 0.7 | 9.0 |
| 02 | 189.2 | 0.0 | 116.9 | 8.2 | 64.1 | 3.4 | 0.0 | 2.5 | 0.1 | 0.8 | 6.5 |
| 03 | 1186.9 | 0.0 | 1005.1 | 149.8 | 32.0 | 15.1 | 1.3 | 7.4 | 5.4 | 0.9 | 43.8 |

As described in Table 1, it is appreciated that the analytical program of the present invention can perform the quantitative determinations of TC and TG contained in respective lipoproteins.

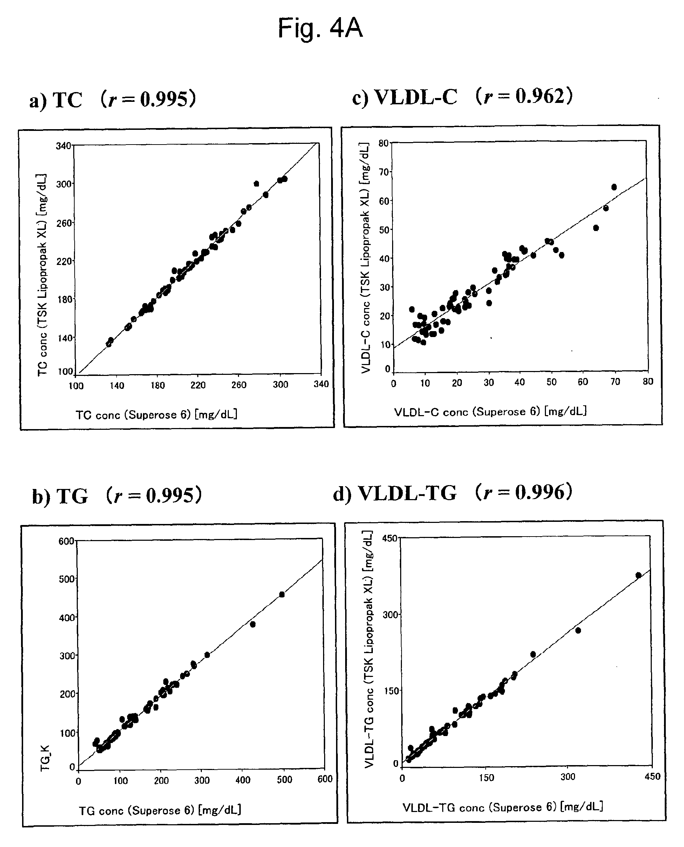

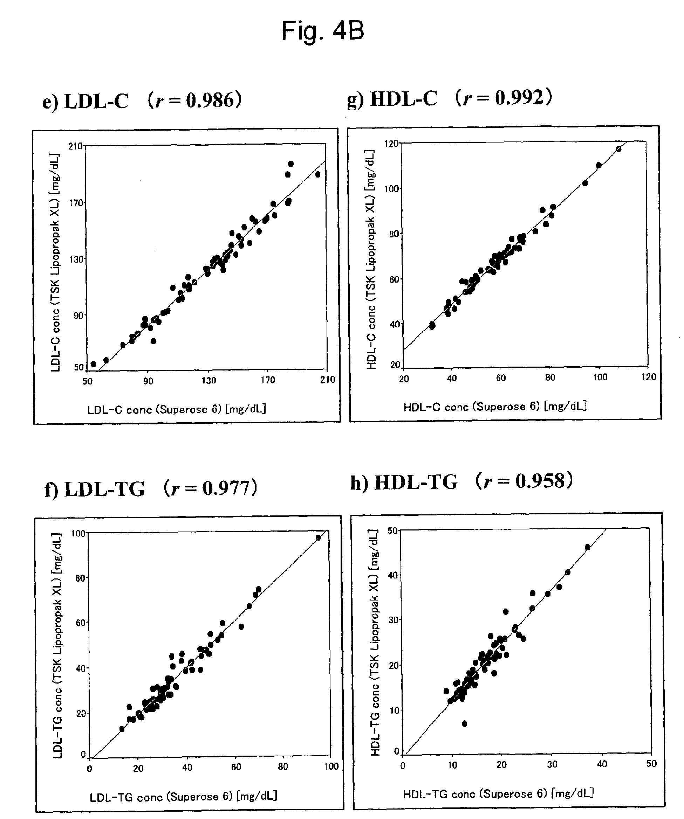

On the other hand, an investigation was carried out on a correlation between a result of analyzing the serum samples taken from the 66 normal healthy persons by using a column ("TSKgel LipopropakXL") in which VLDL and LDL appear as a mixed peak and a result of analyzing the samples by using a column ("Superose 6HR") in which VLDL and LDL respectively appear as a single peak. In the analysis which used the TSKgel LipopropakXL column, TC and TG contained in VLDL and LDL were quantified by the analytical program of the present invention, and TC and TG contained in HDL were quantified by the division-at-valley method. In the analysis which used the Superose 6HR, TC and TG contained in VLDL, LDL, and HDL were quantified by the division-at-valley method. The results are shown in Figures 4A and B. In the respective graphs of Figures 4A and B, a vertical axis indicates an analytical result obtained by using the TSKgel LipopropakXL column, and a horizontal axis indicates an analytical result obtained by using the Superose 6HR column. Further, in Figures 4A and B, a) shows a total amount of TC, b) shows a TC content in VLDL, c) shows a TC content in LDL, d) shows a TC content in HDL, e) shows a total amount of TG, f) shows a TG content in VLDL, g) shows a TG content in LDL, and h) shows a TG content in HDL.

As shown in Figure 4A and B, an analytical result obtained by using the TSKgel LipopropakXL and an analytical result obtained by using the Superose 6HR represent an excellent correlation as for all of lipoproteins. From these results, it has become evident that the analytical program of the present invention can precisely perform the quantitative determinations of TC and TG contained in respective lipoproteins composing the mixed peak.

On the other hand, the analytical program of the present invention can perform the quantitative determination of TC and TG contained in CM, VLDL, LDL, and HDL as described below, even when any peaks corresponding to the predetermined lipoproteins are not detected on the obtained chromatogram. In other words, when it is decided that any of a peak corresponding to CM, peaks corresponding to VLDL and LDL, and a peak corresponding to HDL are not detected, the analytical program of the present invention calculates the TC content and the TG content in the lipoprotein whose peaks are not detected according to the procedure described below.

In this case, the elution times with respect to CM, VLDL, LDL, and HDL are previously determined. Then, according to the analytical program, with respect to the lipoproteins whose peaks have not been detected, the obtained chromatogram is divided by the elution times, and the divided areas are calculated as a TC content and a TG content in the lipoprotein.

Specifically, the elution times by lipoprotein class can be determined by producing a calibration curve obtained by using the standard sample (supplied by Kyowa Medex Co., Ltd.). Generally, it has already been known that the following relationship exists between the elution time X[min] in the HPLC method and a mean particle size Y[nm] therein.

In

$$Y = aX + b$$

Subsequently, mean particle sizes of LDLc and HDLc in the standard sample are determined as follows, and elution times at two points of these LDLc and HDLc are defined to produce a calibration curve. At this moment, the relationship between a type of lipoprotein and a mean particle size thereof is as follows: >80[nm] is considered as CM; 30 to 80[nm] is considered as VLDL; 16 to 30[nm] is considered as LDL; and <16[nm] is considered as HDL. In addition, the elution times corresponding to 80[nm], 30[nm], and 16[nm] on the calibration curve are referred to as Time 80, Time 30, and Time 16.

The standard sample herein is preferably a substance which is close to the LDL time and width at the cholesterol detection in a human normal healthy subject (TC<220, TG<50) pool in which VLDL content is predicted to be extremely low. For example, standard serums for Determiner HDL-C measurement (Lot No. 152, 153, 155, 157, and 159) supplied by Kyowa Medex Co., Ltd. are suitable.

For the determination of the sizes of LDL and HDL in the standard sample, it is possible to determine the sizes of LDL and HDL by using as a primary standard a pooled serum (Okazaki Reference In-house Pooled Serum Lot#90920, described in an analysis certificate by CDC (as of Mar. 5, 1998)) from which the sizes of LDL and HDL are determined by using a column calibrated with a size primary standard (latex beads, Magsphere Inc.).

In the analytical program of the present invention, if it is decided that any peaks about CM are not detected for example, areas on the left side of Time 80 of the chromatogram are considered to be a TC content and a TG content in CM. Similarly, if it is decided that any peaks about VLDL are not detected, areas of regions sandwiched between Time 80 and Time 30 of the chromatogram are considered to be a TC content and a TG content in VLDL. In addition, if it is decided that any peaks about LDL are not detected, areas of regions sandwiched between Time 30 and Time 16 of the chromatogram are considered to be a TC content and a TG content in LDL. Further, if it is decided that any peaks about HDL are not detected, areas on the right side of Time 16 of the chromatogram are considered to be a TC content and a TG content in HDL.

In this way, the analytical program of the present invention allows for the quantitative determinations of TC and TG contained in lipoprotein of interest, even when any peaks corresponding to the predetermined lipoproteins are not detected on the obtained chromatogram.

If noise components are detected on the left side of a peak corresponding to CM or if any peaks unrelated to lipoprotein such as hemolysis are detected on the right side of a peak corresponding to HDL for example, the analytical program of the present invention can also be set to eliminate the area of such peaks. In addition, since the analytical program of the present invention easily allows for identification of a peak corresponding to free glycerol which has appeared on a chromatogram with respect to TG and for complete elimination of a peak area of free glycerol from an area of TG caused by lipoprotein, it is also possible to precisely measure a free glycerol concentration and a TG concentration by using the peak area of free glycerol by itself.

On the contrary, in the prior art enzymatic method, free glycerol had to be eliminated when determining quantitatively a total amount of TG contained in a serum sample, so that the quantitative determination of TG could not be easily performed with a high degree of precision. Contrary to this, according to the analytical program of the present invention, a total amount of TG contained in a serum sample can easily be quantified by setting this program to eliminate a peak which corresponds to free glycerol on the obtained chromatogram.

If the prior art enzymatic method is used for determining quantitatively TG without operation for eliminating free glycerol, the assayed TG content is considered as a value which has been influenced by free glycerol. According to the analytical program of the present invention, a peak corresponding to free glycerol can be identified as described above, so that the measurement result obtained from the enzymatic method can be corrected to an exact value by subtracting an amount of free glycerol from a measurement value which has been obtained without eliminating free glycerol in the enzymatic method.

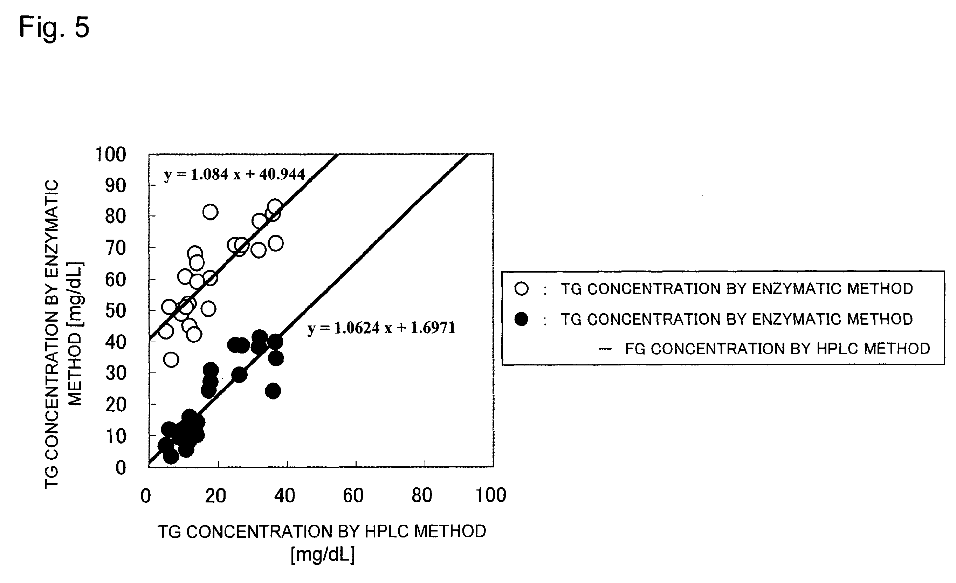

Figure 5 shows a result of determining quantitatively TG in accordance with the enzymatic method in which operation for eliminating free glycerol is not carried out and a corrected values obtained by subtracting an amount of free glycerol identified by the analytical program of the present invention from the result. Figure 5 is also a result obtained when using samples (n=24) from mice containing a large amount of free glycerol in serum. As can be seen from Figure 5, an excellent correlation exists between the result of the quantitative determination of TG in accordance with the enzymatic method in which operation for eliminating free glycerol is not carried out and the corrected values. Consequently, it is understood that the analytical program of the present invention can be applied to the quantitative determination of TG performed by the prior art enzymatic method.

On the other hand, the analytical program of the present invention can measure a concentration of phospholipids contained in lipoprotein, but during this measurement, a concentration of free choline contained in a sample can also be assayed. That is, since it is easily possible to identify a peak corresponding to free choline which has appeared on a chromatogram with respect to phospholipid and to completely eliminate a peak area of free choline from an area of phospholipid derived from lipoprotein, it is also possible to precisely measure a free choline concentration and a phospholipid concentration by using the peak area of free choline by itself.

On the contrary, in the prior art method which uses enzymes, a concentration of phospholipid derived from lipoprotein contained in a sample was assayed without especially eliminating free choline. In the prior art method, when a sample taken from a cerebrospinal fluid or from an animal species was used as an assaying object for example, a phospholipid concentration was assayed as a value influenced by free choline because a large amount of free choline was particularly contained in the sample.

However, according to the analytical program of the present invention, it is possible to measure phospholipid derived from lipoprotein and free choline contained in a sample more precisely and separately as described above. Therefore, it is also possible that the analytical program of the present invention uses a sample containing a large amount of free choline as an assaying object and precisely measures phospholipid and/or free choline contained in the sample.

Although analyses have been conducted on TC and TG contained in lipoprotein in a serum sample in the above description, a technical scope of the present invention is not limited to the above description. That is, according to the method of lipoprotein analysis of the present invention, it also becomes possible to analyze free cholesterol and phosphopipid which are contained in lipoprotein in a serum sample for example.

Further, in the lipoprotein analyzer shown in Figure 1, it is possible to analyze TC, TG, free cholesterol, and phospholipid simultaneously by constituting the splitter 2 to be able to distribute the eluate into four channels or alternatively by positioning the splitter 2 on each of the first channel 3 and the second channel 5 to distribute the eluate into four channels in total.

In addition, the method of lipoprotein analysis according to the present invention is not limited to an analysis of lipoprotein contained in a serum sample, but is applicable to any samples as long as the sample contains lipoprotein. For example, the method of lipoprotein analysis according to the present invention can be applied to a low concentration sample containing cholesterol whose concentration is about one thousandth of that of the serum sample. Specifically, examples of such samples include a sample taken from a laboratory small animal such as a transgenic mouse and the like, a sample containing lipoprotein fractions separated by immuno affinity chromatography, a cerebrospinal fluid, and a supernatant fluid of a culture medium for HepG2 cells or WHHL rabbit stem cells, for example.

Industrial Applicability

As has been described in detail, according to the method of serum lipoprotein analysis and the analytical program therefor of the present invention, the quantitative determination of components contained in individual lipoproteins can be performed with a high degree of precision based on a chromatogram in which multiple lipoproteins contained in a serum sample appear as a mixed peak.

All of the publications, patents, and patent applications cited herein are incorporated herein by reference.

**Claims**

1. A method of lipoprotein analysis, comprising:

a first step of separating a plurality of classes of lipoproteins contained in a sample through liquid chromatography and assaying components contained in the separated lipoproteins; and
a second step of dividing a chromatogram obtained in the first step into each lipoprotein class and determining quantity of the components contained in each class of lipoprotein.

2. The method of lipoprotein analysis according to claim 1, wherein, when the chromatogram obtained in the first step has a mixed peak corresponding to two or more classes of lipoproteins, the mixed peak is divided among the respective classes based on previous quantification of the components included in at least one of the plurality of classes.

3. The method of lipoprotein analysis according to claim 2, wherein the plurality of classes corresponding to the mixed peak consist of a very low density lipoprotein class and a low density lipoprotein class, and in the second step, the mixed peak corresponding to the very low density lipoprotein class and the low density lipoprotein class are divided among the very low density lipoprotein class and the low density lipoprotein class based on previous quantification of the components included in the low density lipoprotein class.

4. The method of lipoprotein analysis according to claim 1, wherein, when a chromatogram without peaks corresponding to the classes is obtained as a result of the first step, an elution time is determined from a mean particle size for the each class based on a calibration curve from a standard sample, which represents a elution time versus mean particle size relationship, and a region defined by the determined elution times is considered to be a region corresponding to the class, and the components contained in the each class of lipoprotein are quantitatively determined.

5. The method of lipoprotein analysis according to claim 4, wherein the plurality of classes comprise at least two classes selected from a group consisting of a chylomicron class, a very low density lipoprotein class, a low density lipoprotein class, and a high density lipoprotein class.

6. The method of lipoprotein analysis according to any one of claims 1 to 5, wherein, in the first step, an eluate from the liquid chromatography is distributed into a plurality of channels, and analysis of different components is performed in the different channels, respectively, to obtain a plurality of chromatograms based on the analytical results of the respective components.

7. The method of lipoprotein analysis according to any one of claims 1 to 5, wherein, in the first step, an eluate from the liquid chromatography is distributed into a first channel for assaying cholesterol and a second channel for assaying triglyceride to obtain a chromatogram with respect to cholesterol and a chromatogram with respect to triglyceride in the first channel and the second channel, respectively.

8. The method of lipoprotein analysis according to any one of claims 1 to 5, wherein a noise(s) positioned before the elution time of chylomicron and a peak (s) derived from hemolytic are eliminated from the chromatogram.

9. The method of lipoprotein analysis according to any one of claims 1 to 5, wherein, when triglyceride is assayed as a component contained in the lipoprotein, a peak corresponding to free glycerol is eliminated from the obtained chromatogram.

10. An analytical program for lipoprotein, comprising:

a first step of separating a plurality of classes of lipoproteins contained in a sample through liquid chromatography and then dividing a mixed peak comprising two or more classes with a plurality of peaks mixed, based on a chromatogram obtained by assaying components contained in the separated lipoproteins; and
a second step of determining quantity of the components contained in the lipoproteins by lipoprotein class.

**11.** The analytical program for lipoprotein according to claim 10, wherein, when the mixed peak corresponding to two classes is divided in the first step, an area representing a half of the mixed peak along its width direction calculated by using a height and a half-width of the mixed peak is multiplied by a value calculated based on a chromatogram obtained by individually quantifying components contained in one class of lipoprotein in order to calculate a corrected area representing a half of the mixed peak along its width direction, and then the components contained in the lipoproteins are quantified by class with the use of a peak half area obtained by dividing the mixed peak by a line which passes through a top of the mixed peak and is perpendicular to its width direction and with the use of the corrected area.

**12.** The analytical program for lipoprotein according to claim 10, further comprising a third step of determining quantity of components contained in the predetermined class of lipoprotein by lipoprotein class on the basis of an elution time of the predetermined class with respect to the chromatogram, when a peak corresponding to a predetermined class is not detected on the chromatogram.

**13.** The analytical program for lipoprotein according to claim 12, wherein the elution time of the lipoprotein is defined on the basis of a calibration curve which is generated by using a standard sample and which represents a relationship between a mean particle size and an elution time of lipoprotein.

**14.** The analytical program for lipoprotein according to claim 10, wherein the components contained in the lipoprotein are triglyceride and cholesterol.

**15.** An analyzer for lipoprotein comprising an analytical program, which comprises a first step of separating a plurality of classes of lipoproteins contained in a sample through liquid chromatography and then dividing a mixed peak comprising two or more classes with a plurality of peaks mixed, based on a chromatogram obtained by assaying components contained in the separated lipoproteins, and a second step of determining quantity of the components contained in the lipoproteins by lipoprotein class.

**16.** The analyzer for lipoprotein according to claim 15, further comprising a column(s) having a resolution which depends on a particle size, a detection part (s) for detecting a lipoprotein component present in an eluate from the column, a processing part for arithmetic processing of output signals from the detection part, and a control part for controlling the arithmetic processing at the processing part in accordance with the analytical program

**17.** The analyzer for lipoprotein according to claim 15, further comprising a distribution part for distributing the eluate from the column into a plurality of channels,

wherein the detection part is positioned on each of the channels distributed by the distribution part to detect different components in the different channels, respectively, and

the plurality of components contained in the lipoproteins is quantitatively determined by class in accordance with the analytical program.

Fig. 1

DIRECTION OF FLOW

DIRECTION OF FLOW

DIRECTION OF FLOW

INJECTION

ELUENT

DATA

OUTPUT SIGNAL

TO EFFLUENT

EP 1 607 740 A1

Fig. 2

(A)

VDVL

LDL

HDL

TC

TG

FG

[mV]

130
110
90
70
50
30
10
-10

17    22    27    32    37

ELUTION TIME (MIN)

(B)

VLDL
(Void)

LDL

HDL

TC

TG

FG

[mV]

70
60
50
40
30
20
10
0
-10

16    21    26    31    36    41    46

ELUTION TIME (MIN)

EP 1 607 740 A1

Fig. 3

# Fig. 4A

**a) TC  ($r = 0.995$)**

TC conc (Superose 6) [mg/dL]

**c) VLDL-C  ($r = 0.962$)**

VLDL-C conc (Superose 6) [mg/dL]

**b) TG  ($r = 0.995$)**

TG conc (Superose 6) [mg/dL]

**d) VLDL-TG  ($r = 0.996$)**

VLDL-TG conc (Superose 6) [mg/dL]

## Fig. 4B

e) LDL-C $(r = 0.986)$

g) HDL-C $(r = 0.992)$

f) LDL-TG $(r = 0.977)$

h) HDL-TG $(r = 0.958)$

Fig. 5

○ : TG CONCENTRATION BY ENZYMATIC METHOD
● : TG CONCENTRATION BY ENZYMATIC METHOD
— FG CONCENTRATION BY HPLC METHOD

$y = 1.084 x + 40.944$

$y = 1.0624 x + 1.6971$

TG CONCENTRATION BY HPLC METHOD [mg/dL]

TG CONCENTRATION BY ENZYMATIC METHOD [mg/dL]

**INTERNATIONAL SEARCH REPORT**

| International application No. |
| --- |
| PCT/JP2004/001260 |

A. CLASSIFICATION OF SUBJECT MATTER
Int.Cl$^7$  G01N30/88, G01N30/86

According to International Patent Classification (IPC) or to both national classification and IPC

B. FIELDS SEARCHED

Minimum documentation searched (classification system followed by classification symbols)
Int.Cl$^7$  G01N30/00-96

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)
JICST(JOIS)

C. DOCUMENTS CONSIDERED TO BE RELEVANT

| Category* | Citation of document, with indication, where appropriate, of the relevant passages | Relevant to claim No. |
| --- | --- | --- |
| X/Y/A | JP 2002-139501 A  (Mass Medical Kabushiki Kaisha), 17 May, 2002 (17.05.02), Full text (Family: none) | 1-3,6-10, 14-17/4,5, 12,13/11 |
| Y | JP 2000-283970 A  (Yokogawa Electric Corp.), 13 October, 2000 (13.10.00), Par. Nos. [0020] to [0022] (Family: none) | 4,5,12,13 |
| X | KITAMURA et al., "HPLC ni yoru Kessei Lipo Tanpakushitsu (CM, VLDL, LDL, HDL) no Teiryo Hoho", Chromatography.Vol.17, No.1(1996), pages 33 to 37 | 1-3,8-10,15, 16 |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 March, 2004 (03.03.04) | 23 March, 2004 (23.03.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/001260

C (Continuation).   DOCUMENTS CONSIDERED TO BE RELEVANT

| Category* | Citation of document, with indication, where appropriate, of the relevant passages | Relevant to claim No. |
|---|---|---|
| X | JP 9-15225 A  (Tosoh Corp.),<br>17 January, 1997 (17.01.97),<br>Full text<br>(Family: none) | 1-3,8-10,15,<br>16 |
| X | OKAZAKI, "Serum Lipoprotein Subclasses by an HPLC Method", AACC Lipids and Lipoproteins Division Newsletter Vol.XIV, No.2(2000), p.1, 9-14 | 1-3,8-10,15,<br>16 |
| A | JP 2000-214150 A  (Tosoh Corp.),<br>04 August, 2000 (04.08.00),<br>(Family: none) | 1-17 |

Form PCT/ISA/210 (continuation of second sheet) (January 2004)